# EUROPÄISCHE PATENTSCHRIFT

(11) **EP 3 899 094 B1**
(45) Veröffentlichungstag und Bekanntmachung des Hinweises auf die Patenterteilung: **29.01.2025**
(21) Anmeldenummer: 19832068.1
(22) Anmeldetag: 18.12.2019
(51) Int. Cl.: C25B 1/04, H01M 8/04, C25B 15/00, F24D 5/00, G06Q 50/06

(54) **SPÜLSYSTEM UND DESSEN VERWENDUNG IN EINEM ENERGIESYSTEM**
PURGING SYSTEM AND USE THEREOF IN AN ENERGY SYSTEM
SYSTÈME DE RINÇAGE ET SON UTILISATION DANS UN SYSTÈME ÉNERGÉTIQUE

(30) Priorität: 20.12.2018 DE 102018133201
(43) Veröffentlichungstag der Anmeldung: 27.10.2021
(73) Patentinhaber: HPS Home Power Solutions AG, 12489 Berlin (DE)
(72) Erfinder: SCHÖNFELDT, Renaldo, 12459 Berlin (DE); HIERL, Andreas, 12526 Berlin (DE); SCHNEIDER, Gunnar, 15745 Wildau (DE); SCHULTE, Jonas, 12103 Berlin (DE)
(74) Vertreter: Müller, Thomas
(86) Internationale Anmeldenummer: PCT/EP2019/086014
(87) Internationale Veröffentlichungsnummer: WO 2020/127527

(56) Entgegenhaltungen:
- EP-A1- 3 346 532
- WO-A1-2017/089469
- DE-B4- 112004 001 483
- US-A1- 2002 094 469

## Beschreibung

Die vorliegende Erfindung betrifft zunächst ein Spülsystem zum Spülen von Komponenten eines Energiesystems gemäß dem Oberbegriff des unabhängigen Patentanspruchs 1 (siehe z.B. EP 3 346 532 A1) Weiterhin betrifft die Erfindung ein Energiesystem gemäß dem Oberbegriff des unabhängigen Patentanspruchs 10. Schließlich betrifft die Erfindung auch ein Verfahren zum Betreiben eines Spülsystems in einem Energiesystem sowie eine besondere Verwendung einer Vermischungseinrichtung eines Spülsystems, siehe Ansprüche 14 und 15.

Energiesysteme der gattungsgemäßen Art sind im Stand der Technik bereits auf vielfältige Weise bekannt. Mit derartigen Systemen wird üblicherweise Energie für verschiedenste Anwendungsgebiete erzeugt und bereitgestellt.

Bei einer bekannten Art solcher Energiesysteme wird in einer ersten Energiequelle Energie erzeugt. Bei der erzeugten Energie kann es sich beispielsweise um Wasserstoff handeln. Der Wasserstoff wird beispielsweise in einer Elektrolyseeinrichtung erzeugt und in einer zweiten Energiequelleneinrichtung, bei der es sich beispielsweise um eine Speichereinrichtung handelt, gespeichert. Hierbei handelt es sich beispielsweise um eine erste Betriebsweise des Energiesystems. Während des Betriebs des Energiesystems wird der Wasserstoff aus der Speichereinrichtung ausgespeichert und in einer ersten Energiesenkeneinrichtung verbraucht. Hierbei handelt es sich beispielsweise um eine zweite Betriebsweise des Energiesystems. Bei einer solchen ersten Energiesenkeneinrichtung handelt es sich beispielsweise um eine Brennstoffzelleneinrichtung. Üblicherweise sind die vorbeschriebenen Komponenten des Energiesystems räumlich voneinander getrennt und über eine Verbindungsleitungseinrichtung miteinander verbunden. Beide vorgenannten Betriebsweisen bedürfen üblicherweise eines unterschiedlichen Druckniveaus. Während in der ersten Betriebsweise mit der Elektrolyse Drücke von 20 bis 60 bar vorherrschen, sind für den Betrieb der Brennstoffzelleneinrichtung in der zweiten Betriebsweise Drücke von kleiner 20 bar erforderlich. Ein solches bekanntes Energiesystem ist beispielsweise in der DE 103 07 112 A1 offenbart.

Im Rahmen des Betriebs eines solchen Energiesystems ist es erforderlich, die Brennstoffzelleneinrichtung, insbesondere auf deren Anodenseite und/oder die Elektrolyseeinrichtung, insbesondere auf deren Kathodenseite, regelmäßig zu spülen. Ein Spülen, das auch als "Purgen" bezeichnet wird, ist insbesondere erforderlich, um unerwünschte Fremdgasanteile, sowie sich lokal in den Zellstrukturen ansammelndes flüssiges Wasser, die/das die Leistungsfähigkeit und die Lebensdauer der Brennstoffzelleneinrichtung und/oder der Elektrolyseeinrichtung negativ beeinflussen können, in regelmäßigen Abständen oder abhängig von den Betriebszuständen abzuführen. Das Spülen erfolgt unter Zuhilfenahme eines geeigneten Spülsystems.

In der US2002/0094469A1 wird ein Brennstoffzellensystem beschrieben, bei dem abgegebenes Wasserstoffgas verdünnt wird. Dazu ist eine als geschlossene Kammer ausgebildete Mischkammer vorgesehen, die eingangsseitig jeweils Einlässe für Wasserstoff und Sauerstoff, und ausgangsseitig einen Auslass für ein entsprechend verdünntes Gasgemisch aufweist.

Ein anderes bekanntes Spülsystem, von dem die vorliegende Erfindung ausgeht, ist in der WO 2017/089466 A1 der Anmelderin offenbart und beschrieben. Bei dieser bekannten Lösung wird während des Spülvorgangs ein mit Wasserstoff beladener Spülvolumenstrom erzeugt und in einer einer Spüleinrichtung zugeordneten Speicherkammer zunächst gespeichert. Aus der Speicherkammer wird der mit Wasserstoff beladene Spülvolumenstrom anschießend als Ablassvolumenstrom über eine Ausströmeinrichtung an die Umgebung abgegeben.

Beispielsweise handelt es sich bei der Brennstoffzelleneinrichtung und der Elektrolyseeinrichtung sowie dem Spülsystem um Komponenten eines ersten Untersystems des Energiesystems, welches beispielsweise in einem Systemschrank untergebracht ist. Die Abgabe des Ablassvolumenstroms erfolgt an die Umgebung dann derart, dass er über die Ausströmeinrichtung in einen bestimmten, als Mischzone bezeichneten Bereich im Systemschrank abgegeben wird. Dieser Bereich ist eigens dafür ausgebildet. Denn bei dem Ablassvolumenstrom handelt es sich wegen des Wasserstoffgehalts, das an dieser Stelle ein Schadgas darstellt, um ein explosives Gasgemisch, so dass sich im Bereich des Austritts keine Zündquellen in der Nähe befinden dürfen. Um den Wasserstoffgehalt auf einen Wert unterhalb der unteren Explosionsrate zu bringen, ist es erforderlich, den mit Wasserstoff beladenen Ablassvolumenstrom so weit zu verdünnen, dass der Wasserstoffgehalt im Volumenstrom unter die untere Explosionsgrenze rutscht. Dies wird beispielsweise erreicht, indem der Ablassvolumenstrom in der Mischzone mit einem weiteren Luftvolumenstrom vermischt wird. Bei diesem weiteren Luftvolumenstrom handelt es sich beispielsweise um einen Abluftvolumenstrom, der während des Betriebs des Energiesystems an anderer Stelle entsteht.

Der in der bekannten Lösung beschriebene Spülvorgang funktioniert bereits sehr gut. Dennoch besteht immer das Bedürfnis, das Energiesystem dahingehend weiter zu modifizieren, dass die von austretendem Wasserstoff ausgehenden Gefahren, insbesondere hinsichtlich der Gefahr von Explosionen, sicher und zu jedem Zeitpunkt verlässlich ausgeschlossen werden.

Ausgehend von der bekannten Lösung könnten diesbezügliche Weiterbildungen beispielsweise beinhalten, dass man für den Verdünnungsluftvolumenstrom einen expliziten Lüfter einsetzt. Ein Lüfter stellt jedoch eine weitere Systemkomponente dar, die Energie benötigt und die zusätzliche Kosten verursacht und Bauraum benötigt. Zusätzlich müssten derartige Lüfter saugend und explosionsgeschützt ausgebildet sein, da sie grundsätzlich eine Zündquelle darstellen. Der Einsatz von zusätzlichen Lüftern ist deshalb nachteilig. Weiterhin könnte neben der Luftüberwachung zusätzlich auch ein Wasserstoffsensor eingesetzt werden. Das würde aber den Betrieb des Spülsystems und damit des Energiesystems verkomplizieren. Ein Wasserstoffsensor kann nur eine Mischkonzentration messen, wobei nur bei genauer Kenntnis der Strömungsverhältnisse Aussagen zur tatsächlichen Wasserstoffkonzentration innerhalb der Mischzone gemacht werden können. Das ist aber zu ungenau. Zudem müssen große Sicherheitsfaktoren genutzt werden. Auch sind Fehlerauslösungen möglich. Auch stellt die Verwendung eines Wasserstoffsensors an sich noch keine Maßnahme zur Verringerung des Wasserstoffgehalts im Ablassvolumenstrom dar. Der Einsatz einer Gasüberwachungseinrichtung ist üblicherweise einem Wartungsintervall unterlegen. Gängig sind beispielsweise funktionale Prüfungen alle 4 Monate.

Ausgehend vom genannten Stand der Technik liegt der vorliegenden Erfindung deshalb die Aufgabe zugrunde, zur Vermeidung von Explosionsgefahren durch Wasserstoff im Ablassvolumenstrom nach einem Spülvorgang, durch einfache konstruktive und kostengünstige Maßnahmen ein gattungsgemäßes Spülsystem weiter vorteilhaft zu modifizieren.

Diese Aufgabe wird erfindungsgemäß gelöst durch das Spülsystem mit den Merkmalen gemäß dem unabhängigen Patentanspruch 1, welches den ersten Aspekt der Erfindung darstellt, durch das Energiesystem mit den Merkmalen gemäß dem unabhängigen Patentanspruch 10, welches den zweiten Aspekt der Erfindung darstellt, durch das Verfahren mit den Merkmalen gemäß dem unabhängigen Patentanspruch 14, welches den dritten Aspekt der Erfindung darstellt, sowie durch die besondere Verwendung mit den Merkmalen gemäß dem unabhängigen Patentanspruch 15, welche den vierten Aspekt der Erfindung darstellt. Weitere Merkmale und Details der Erfindung ergeben sich aus den Unteransprüchen, der Beschreibung sowie den Zeichnungen. Dabei gelten Merkmale und Details, die im Zusammenhang mit dem ersten Erfindungsaspekt offenbart sind, vollumfänglich auch im Zusammenhang mit dem zweiten, dritten und vierten Erfindungsaspekt, und jeweils umgekehrt, so dass hinsichtlich der Offenbarung eines der Erfindungsaspekte stets vollinhaltlich auch Bezug auf die jeweils anderen Erfindungsaspekte genommen und auf diese verwiesen wird.

Der grundlegende Gedanke der vorliegenden Erfindung besteht darin, dass durch eine einfache Konstruktion ein Bereich einer gezielten Vermischung von Schadgas, bei dem es sich insbesondere um den wasserstoffhaltigen Ablassvolumenstrom handelt, geschaffen wird.

Die Erfindung ist zunächst gerichtet auf ein Spülsystem, durch das einzelne Komponenten eines Energiesystems gespült werden. Bei dem Spülsystem handelt es sich insbesondere um ein aus mehreren Komponenten bestehendes Ganzes, wobei die Komponenten miteinander zu einer zweckgebundenen Einheit verbunden sind. Das Spülsystem ist bevorzugt Bestandteil eines Energiesystems. Bei dem Energiesystem handelt es sich wiederum insbesondere um ein aus mehreren Komponenten bestehendes Ganzes, wobei die Komponenten miteinander zu einer zweckgebundenen Einheit verbunden sind. Im vorliegenden Fall handelt es sich bei dem Energiesystem bevorzugt um ein System zum Erzeugen beziehungsweise Bereitstellen von Energie, vorzugsweise von elektrischer Energie. Grundsätzlich ist die Erfindung nicht auf bestimmte Arten von Energiesystemen beschränkt. Im Folgenden werden diesbezüglich verschiedene bevorzugte Ausführungsbeispiele beschrieben.

In einer bevorzugten Ausführungsform handelt es sich bei dem Energiesystem um ein Hausenergiesystem. Hausenergiesysteme sind grundsätzlich aus dem Stand der Technik bekannt und dienen der Versorgung von Häusern, beispielsweise von Niedrigenergiehäusern, Passivhäusern oder Nullenergiehäusern, mit Energie in Form von Wärme und insbesondere in Form von Strom, beispielsweise Strom aus regenerativen Energiequellen wie beispielsweise Photovoltaik (PV)-Generatoren oder Kleinwindkraftanlagen. Ein solches Hausenergiesystem schafft die Grundlage dafür, dass der Energiebedarf eines Hauses, insbesondere eines Niedrigenergiehauses, eines Passivhauses oder eines Nullenergiehauses, sowohl hinsichtlich des Strom- als auch des Wärmebedarfs vollständig aus erneuerbaren Energiequellen gedeckt werden kann und somit vollständige CO₂-Freiheit im Betrieb besteht. Wenigstens aber kann der Strombedarf eines Hauses im Sinne einer anzustrebenden Eigenverbrauchserhöhung nahezu vollständig aus erneuerbaren Energiequellen, insbesondere mittels eines PV-Generators und/oder einer Kleinwindenergieanlage, gedeckt werden.

Ein solches Hausenergiesystem ist beispielsweise in den Patentanmeldungen WO 2017/089468 A1 und WO 2017/089469 A1 der Anmelderin offenbart und beschrieben, deren Offenbarungsgehalt in die Beschreibung der vorliegenden Patentanmeldung mit einbezogen wird.

Gemäß einer bevorzugten Ausführungsform weist ein Hausenergiesystem der genannten Art die folgenden Grundmerkmale auf:
- einen DC-Einspeisepunkt, bevorzugt ausgebildet für eine Nenn-Spannung von 48 Volt, und/oder einen AC-Einspeisepunkt, bevorzugt ausgebildet für eine Spannung von 230 Volt oder 110 Volt, wobei der DC-Einspeisepunkt und/oder der AC-Einspeisepunkt im Betrieb zumindest zeitweise mit einem elektrischen Verbraucher, der eine Verbrauchs-Leistung aufweist, verbunden ist,
- einen elektrisch mit dem DC-Einspeisepunkt wenigstens zeitweise verbundenen PV-Generator zum Erzeugen einer elektrischen PV-Leistung,
- eine elektrisch mit dem DC-Einspeisepunkt oder mit dem AC-Einspeisepunkt wenigstens zeitweise verbundene Brennstoffzelleneinheit zum Erzeugen einer elektrischen Brennstoffzellen-Leistung,
- eine elektrisch mit dem DC-Einspeisepunkt verbundene Elektrolyseeinheit zum Erzeugen von durch die Brennstoffzelleneinheit zu verbrauchendem Wasserstoff, wobei die Elektrolyseeinheit im Betrieb mit einer elektrischen Elektrolyse-Eingangsleistung gespeist wird,
- einen Wasserstofftank, insbesondere als Langzeitenergiespeicher, der mit der Brennstoffzelleneinheit und der Elektrolyseeinheit wenigstens zeitweise fluidverbunden ist und zum Speichern von mittels der Elektrolyseeinheit zu erzeugendem und durch die Brennstoffzelleneinheit zu verbrauchendem Wasserstoff ausgebildet ist,
- eine Speicher-Batterieeinheit, insbesondere als Kurzzeitenergiespeicher, die elektrisch mit dem DC-Einspeisepunkt verbunden oder zu verbinden ist, so dass eine elektrische PV-Leistung und eine elektrische Brennstoffzellen-Leistung in die Speicher-Batterieeinheit eingespeichert werden kann und eine elektrische Elektrolyse-Eingangsleistung und eine Verbrauchs-Leistung aus der Speicher-Batterieeinheit entnommen werden können; und
- ein Steuermodul zum Steuern der Hausenergieanlage.

Gemäß dem ersten Erfindungsaspekt wird ein Spülsystem bereitgestellt, welches die Merkmale des unabhängigen Patentanspruchs 1 aufweist.

Das Spülsystem ist bereitgestellt, um wenigstens eine Energiequelleneinrichtung und/oder wenigstens eine Energiesenkeneinrichtung zu spülen, Diese beiden Komponenten stellen Bestandteile eines Energiesystems dar, welches in der allgemeinen Beschreibung weiter oben und im Zusammenhang mit dem zweiten Erfindungsaspekt weiter unten im Detail beschrieben wird, so dass an dieser Stelle diesbezüglich auch auf die entsprechenden Ausführungen dort Bezug genommen und verwiesen wird. In einer bevorzugten Ausführungsform, anhand derer die Erfindung exemplarisch erläutert wird, handelt es sich bei der Energiequelleneinrichtung bevorzugt um eine Elektrolyseeinrichtung, insbesondere zur Herstellung von Wasserstoff. Bei der Energiesenkeneinrichtung handelt es sich bevorzugt um eine Brennstoffzelleneinrichtung.

Das Spülsystem weist eine Spüleinrichtung auf, die derart bereitgestellt ist, dass sie in der Lage ist, während eines Spülvorgangs einen Ablassvolumenstrom zu erzeugen. Dieser Ablassvolumenstrom, der Wasserstoff enthält, was an dieser Stelle ein Schadgas darstellt, entsteht beispielsweise dann, wenn die Brennstoffzelleneinrichtung, insbesondere auf deren Anodenseite, und/oder die Elektrolyseeinrichtung, insbesondere auf deren Kathodenseite, gespült wird/werden.

Ein solches Spülsystem, welches auch als "Purge-System" bezeichnet wird, und welches bevorzugt eine Anzahl verschiedener Komponenten aufweist, wird nachfolgend näher erläutert. Das Spülen selbst wird auch als "Purgen" bezeichnet.

In einer bevorzugten Ausführungsform weist das Spülsystem eine Spüleinrichtung mit einem Spülkanal auf, der einen ersten und mindestens einen zweiten Spülkanalabschnitt aufweist, die über ein Purge-Ventil der Spüleinrichtung miteinander fluidverbindbar sind, und mit einem mit dem Spülkanal fluidverbundenen und dem Purge-Ventil nachgeschalteten Pufferspeicher mit mindestens einer Speicherkammer, die zur Zwischenspeicherung einer pulsartig mit einem Spül-Massenstrom aus der Brennstoffzelleneinrichtung und/oder der Elektrolyseeinrichtung auszuspülende Fluidmasse vorgesehen ist, sodass diese Fluidmasse mit einem Ablass-Massenstrom, bei dem es sich um den Ablassvolumenstrom handelt, der geringer als der Spül-Massenstrom ist, aus einer mit dem zweiten Spülkanalabschnitt fluidverbundenen Ausströmeinrichtung abgelassen werden kann. Der Ablass-Massenstrom, welcher typischerweise zu großen Teilen aus Wasserstoff besteht, kann einem Luftmassenstrom, bei dem es sich um den Luftvolumenstrom handelt, zugemischt werden, so dass das entstehende Gasgemisch eine Wasserstoffkonzentration in allen Betriebszuständen deutlich unterhalb der unteren Zündgrenze von Wasserstoff in Luft aufweist. Durch diesen Verdünnungseffekt ist ein sicherer Betrieb des Energiesystems möglich. Dadurch, dass dem Purge-Ventil ein Pufferspeicher mit einer Speicherkammer nachgeschaltet ist, kann eine pulsartig mit dem Spül-Massenstrom ausgetragene Fluidmasse mit einem Ablass-Massenstrom, der geringer als der Spül-Massenstrom ist, ausgetragen werden. Vorteilhafterweise ergibt sich dadurch eine Glättung des pulsartigen Spül-Massenstroms, was vorteilhaft zur Vermeidung von kritischen Wasserstoffkonzentrationen bei gleichzeitig niedrigerem Abluft-Massenstrom führt.

In einer bevorzugten Ausgestaltung ist die Speicherkammer expandierbar. Die Speicherkammer kann durch die pulsartig mit dem Spül-Massenstrom aus der Brennstoffzelleneinrichtung und/oder der Elektrolyseeinrichtung auszuspülenden Fluidmasse expandierbar sein. Besonders bevorzugt ist die Speicherkammer als Faltenbalg ausgebildet, der ein jeweiliges Spül-Volumen, das heißt den Spül-Massenstrom multipliziert mit einer Pulsdauer eines Purges, ohne, oder mit nur geringfügigem Aufbau von Gegendruck, aufnehmen kann. Eine als Faltenbalg ausgebildete Speicherkammer kann ausgebildet sein, durch eine Gravitationskraft, insbesondere ausschließlich durch eine Gravitationskraft einer bevorzugt frei beweglichen Endplatte des Faltenbalgs, in ihren nicht expandierten Zustand zurückbewegt zu werden. Zur gezielten Anpassung der Kraft, die den Faltenbalg in seinen nicht expandierten Zustand zurückbewegt, und damit der Entladezeit und des Druckverlaufes des Faltenbalgpuffers über der Zeit, kann die Gravitationskraft auch durch eine angebrachte Federvorrichtung verstärkt oder teilweise kompensiert sein.

Wie schon erwähnt wurde, wird der Ablassvolumenstrom aus der Speicherkammer bereitgestellt, die insbesondere als Faltenbalg ausgebildet ist. Die vorliegende Erfindung ist jedoch nicht auf diese Ausführungsform beschränkt, In anderer Ausgestaltung kann die Speicherkammer als Blasenspeicher oder als Kolbenspeicher ausgebildet sein. Alternativ zu einer expandierbaren Ausbildung der Speicherkammer kann die Speicherkammer aber auch als starrer Druckbehälter ausgebildet sein, bei welchem die Speicherkammer derart ausgebildet ist, dass die pulsartig mit dem Spül-Massenstrom aus der Brennstoffzelleneinrichtung und/oder der Elektrolyseeinrichtung ausgespülte Fluidmasse zu einem Druckanstieg in der Speicherkammer führt.

Das Spülsystem kann ausgebildet sein, einen Spül-Volumenstrom auf einen Ablassvolumenstrom von weniger als 10%, vorzugsweise weniger als 3 % des Spül-Volumenstroms zu reduzieren. Bevorzugt erfolgt ein Austragen des Ablassvolumenstrom zur Umgebung über einen mindestens 50 Nm³/h großen Abluftvolumenstrom, der auch als Fortluftvolumenstrom bezeichnet wird. Bevorzugt liegt ein Nenn-Betriebsdruck der Speicherkammer weniger als 50 Millibar, bevorzugt weniger als 20 Millibar über einem Betriebsdruck des Abluftvolumenstroms beziehungsweise Fortluftvolumenstroms.

Anders ausgedrückt hat das Spülsystem insbesondere die Funktion, dass ein Luftvolumenstrom den Ausgang der Spülkammer, beispielsweise Purge-Balg-Ausgang umspült und den Wasserstoff verdünnt, welcher aus der Elektrolyseeinrichtung und/oder der Brennstoffzelleneinrichtung gespült wird. Der Spülvorgang wird im Fachjargon auch als Purge bezeichnet und ist notwendig für den sicheren Betrieb beider Module, bei dem die jeweiligen Stacks durch die Spülung mit reinem Wasserstoff von Verunreinigungen und Feuchtigkeit befreit werden. Die gezielte Beimischung zu einem Luftvolumenstrom, bei dem es sich beispielsweise um einen Abluftvolumenstrom handeln kann, schließt die Bildung einer explosionsfähigen Atmosphäre aus. Im Anschluss kann die Abluft über eine Kühleinrichtung, beispielsweise einen Luft-Wasser-Wärmetauscher, geführt werden. Dort kann entweder die überschüssige Wärme aus der Elektrolyseeinrichtung abgeführt oder die warme Abluft zum Erhitzen von Wasser in einem Hygiene-Warmwasserspeicher genutzt werden. Die resultierende Fortluft wird nach draußen geleitet

Ein solches Spülsystem ist beispielsweise in de Patentanmeldung WO 2017/089466 A1 der Anmelderin offenbart und beschrieben, deren Offenbarungsgehalt in die Beschreibung der vorliegenden Patentanmeldung mit einbezogen wird.

Erfindungsgemäß ist nun vorgesehen, dass das Spülsystem eine der Spüleinrichtung in Strömungsrichtung des Ablassvolumenstroms nachgeordnete Vermischungseinrichtung aufweist. Die Vermischungseinrichtung ist insbesondere eine Konstruktion, um den Ablassvolumenstrom mit einem weiteren Luftvolumenstrom zu vermischen. Bei dem weiteren Luftvolumenstrom handelt es sich bevorzugt um einen Luftvolumenstrom, der beim Betrieb des Energiesystems an anderer Stelle entsteht, beispielsweise um einen Abluftvolumenstrom. Durch eine Vermischung der beiden Volumenströme in der Vermischungseinrichtung tritt der Effekt ein, dass der mit Wasserstoff beladene Ablassvolumenstrom so weit verdünnt wird, dass der Wasserstoffgehalt unter die untere Explosionsgrenze gedrückt wird, vorzugsweise auf einen Gehalt non kleiner 10.000 ppm (1 Vol-%).

Bevorzugt ist die Vermischungseinrichtung eine Komponente, die dem Spülsystem zugeordnet ist, Sie wird deshalb bevorzugt als Komponente des Spülsystems angesehen. Die Vermischungseinrichtung kann aber genauso gut dem Spülsystem nachgeordnet sein. In diesem Fall wäre die Vermischungseinrichtung nicht mehr als Komponente des Spülsystems, sondern als eine dazu unabhängige Komponente zu interpretieren, die aber mit dem Spülsystem zusammenwirkt.

Erfindungsgemäß weist die Vermischungseinrichtung eine Wandung auf, die einen definierten offenen Durchmischungsraum für die Vermischung des Ablassvolumenstroms mit dem Luftvolumenstrom, insbesondere mit definierten Strömungsverhältnissen, begrenzt. Bei dem von der Wandung der Vermischungseinrichtung teilweise begrenzten Raum handelt es sich insbesondere um denjenigen Ort, wo die Durchmischung stattfindet. Der Begriff "Raum" ist somit insbesondere sowohl körperlich, das heißt mit einer körperlichen Begrenzung, als auch funktional zu verstehen. Der Raum ist nur zum Teil von der Wandung begrenzt. Bei einem solchen Raum spricht man von einem offenen Raum, da dieser nur teilweise und bereichsweise von der Wandung umgeben und begrenzt ist. Die Wandung hat dabei die Funktion; den Durchmischungsraum räumlich einzugrenzen beziehungsweise zu begrenzen. Ein offener Durchmischungsraum zeichnet sich insbesondere dadurch aus, dass dieser möglichst großflächig und/oder an möglichst vielen Stellen geöffnet beziehungsweise offen ist, damit sich die verschiedenen Volumenströme gut vermischen können. Verschiedene bevorzugte Ausführungsbeispiele hierzu werden im weiteren Verlauf der Beschreibung näher erläutert.

Bevorzugt weist das Spülsystem eine Ausströmeinrichtung auf, die mit der Vermischungseirichtung zusammenwirkt. Ein Zusammenwirken bedeutet dabei insbesondere, dass die Ausströmeinrichtung mit der Vermischungseinrichtung zusammenarbeitet beziehungsweise kooperiert. Insbesondere ist dabei vorgesehen, dass die Ausströmeinrichtung und die Vermischungseinrichtung derart nah beieinander angeordnet sind, dass der Ablassvolumenstrom aus der Ausströmeinrichtung in die Vermischungseinrichtung eintreten kann. Die Erfindung ist nicht auf bestimmte Ausführungsformen für die Ausströmeinrichtung beschränkt. Beispielsweise kann die Ausströmeinrichtung in Form einer Blende, Drossel, Düse, Strahlpumpe, Venturidüse oder als Rekombinator ausgebildet sein. Die Ausströmeinrichtung hat insbesondere die Funktion, den in den Durchmischungsraum eintretenden Ablassvolumenstrom zu begrenzen, beziehungsweise einen definierten Ablassvolumenstrom für den Eintritt in den Durchmischungsraum bereitzustellen.

In einer bevorzugten Ausführungsform weist die Vermischungseinrichtung eine Verteileinrichtung auf, die zur Verteilung des Ablassvolumenstroms im Durchmischungsraum ausgebildet und bereitgestellt ist. Es ist die Grundfunktion dieser Verteileinrichtung, dass sie den Ablassvolumenstrom derart in dem Durchmischungsraum verteilt, dass sich dieser möglichst gut und vorzugsweise gleichmäßig mit dem Luftvolumenstrom vermischen kann. Bevorzugt wirkt die Verteileinrichtung mit der Ausströmeinrichtung zusammen, vorzugsweise derart, dass sich die Verteileinrichtung direkt an die Ausströmeinrichtung anschließt. Bevorzugt ist die Verteileinrichtung zumindest teilweise in dem Durchmischungsraum angeordnet oder ausgebildet. In einer bevorzugten Ausführungsform ist die Verteileinrichtung ganz in dem Durchmischungsraum angeordnet. In anderer Ausgestaltung ist die Verteileinrichtung nur zum Teil im Vermischungsraum angeordnet. Das bedeutet, dass die Verteileinrichtung bereichsweise aus dem Durchmischungsraum herausragt.

Die Erfindung ist nicht auf bestimmte Ausführungsformen dieser Verteileinrichtung beschränkt.

In einer bevorzugten Ausführungsform ist die Verteileinrichtung in Form eines, insbesondere langestreckten, Rohrs oder Profilelements ausgebildet, welches sich zumindest teilweise, vorzugsweise über die gesamte Länge oder annähernd die gesamte Länge des Durchmischungsraums erstreckt.

In weiterer bevorzugter Ausgestaltung besteht die Verteilungseinrichtung aus einem porösen Material. Der Ablassvolumenstrom durchdringt dann die Poren der Verteileinrichtung. Damit ist die Verteileinrichtung in der Lage, die Strömung des Ablassvolumenstroms zu steuern, beispielsweise in einer bevorzugten Strömungsrichtung, und/oder begrenzen und/oder gegebenenfalls auch aufzustauen. Dadurch wird es ermöglicht, dass der Ablassvolumenstrom möglichst gleichmäßig verteilt und/oder gegebenenfalls auch mit reduziertem Druck in den Durchmischungsraum eintritt, so dass er sich möglichst gleichmäßig in dem Durchmischungsraum mit dem Luftvolumenstrom vermischen kann.

Damit der Durchmischungsraum der Vermischungseinrichtung möglichst offen gestaltet ist, ist erfindungsgemäß realisiert, dass die Wandung der Vermischungseinrichtung nur einen Teilbereich des Durchmischungsraums begrenzt. Die von der Wandung nicht begrenzte Bereich der Vermischungseinrichtung bildet einen Eintrittsbereich für den Ablassvolumenstrom und den Luftvolumenstrom. Erfindungsgemäß ist dabei vorgesehen, dass die Wandung der Vermischungseinrichtung den Durchmischungsraum zu weniger als 90%, bevorzugt zu weniger als 80%, bevorzugt zu weniger als 70&, bevorzugt zu weniger als 60%, bevorzugt zu weniger als 50% begrenzt.

Je nach Ausgestaltung kann der Eintrittsbereich so ausgestaltet sein, dass der Ablassvolumenstrom und der Luftvolumenstrom getrennt voneinander jeweils über eigene Eintrittsteilbereiche in den Durchmischungsraum hineingelangen. In anderer Ausgestaltung können der Ablassvolumenstrom und der Luftvolumenstrom zumindest teilweise aber auch über einen gemeinsamen Eintrittsbereich in den Durchmischungsraum hineingelangen.

In bevorzugter Weiterbildung weist die Vermischungseinrichtung wenigstens ein Element zum Erhöhen der Verweilzeit des Ablassvolumenstroms in der Vermischungseinrichtung auf. Damit wird die Verweilzeit des Wasserstoffs innerhalb der "geschützten" Umgebung der Vermischungseinrichtung erhöht und damit auch die Zeit für die Durchmischung. Die Erfindung ist nicht auf bestimmte Arten solcher Elemente beschränkt. Beispielsweise kann es sich um ein Vlieselement, um ein Styroporelement, um eine Abklebung, oder dergleichen handeln.

Die vorliegende Erfindung ist nicht auf bestimmte Ausführungsformen beschränkt, wie die Vermischungseinrichtung kontruktiv auszusehen hat. Im Folgenden werden hierzu nun eine Riehe bevorzugter Ausführungsbeispiele beschrieben, ohne dass die Erfindung auf diese konkret genannten Beispiele beschränkt ist.

Beispielsweise kann die Vermischungseinrichtung haubenförmig oder schirmförmig oder schalenförmig ausgebildet sein, oder die Vermischungseinrichtung weist eine bogenförmig verlaufende Wandung auf. Die Vermischungseinrichtung kann aber auch die Form einer Wölbung oder einer Kuppel oder einen bogenförmigen Verlauf haben. Andere Formen, wie beispielsweise die einer Glocke, insbesondere einer Käseglocke, eines Trichters, einer Pyramide, oder dergleichen sind ebenfalls denkbar. Die Kontur der Vermischungseinrichtung wird dabei insbesondere durch einen entsprechenden Verlauf oder eine entsprechende Ausgestaltung der Wandung der Vermischungseinrichtung realisiert.

In einer anderen bevorzugten Ausgestaltung ist die Vermischungseinrichtung in Form eines Bruchteils eines Rohres ausgebildet, wobei die Wandung des Rohrbruchteils den Durchmischungsraum begrenzt. Darin kann sich beispielsweise eine wie weiter oben beschriebene Verteileinrichtung, beispielsweise in Form eines Rohrs aus porösem Material, befinden, Ein Rohr ist insbesondere ein langgestreckter Hohlkörper, der insbesondere eine Länge hat, die größer, bevorzugt um ein Vielfaches größer ist als dessen Querschnitt. Ein Vollrohr ist dabei ein Rohr, dessen Wandung den Innenraum des Rohres von allen Seiten und vollständig umgibt. Der Bruchteil eines Rohres ist ein Teilsegment eines solchen Vollrohres.

Beispielsweise kann die Vermischungseinrichtung in Form eines Viertelrohres, oder eines Drittelrohres oder eines Dreiviertelrohres oder eines Zweidrittelrohres ausgebildet sein. In einer bevorzugten Ausführungsform ist die Vermischungseinrichtung in Form eines Halbrohres ausgebildet, wobei die Wandung des Halbrohres den Durchmischungsraum begrenzt.

Der Ablassvolumenstrom wird bevorzugt durch den Weg in der Vermischungseinrichtung gebremst. Diese ist deshalb bevorzugt möglichst lang, beispielsweise als möglichst langes Halbrohr, und mit großer Mischoberfläche ausgebildet.

Bevorzugt weist in einem solchen Fall die Vermischungseinrichtung eine erste offene Stirnseite und/oder eine offene Unterseite auf. Die erste Stirnseite und/oder die offene Unterseite dienen dabei insbesondere als Eintrittspunkt oder Eintrittsfläche beziehungsweise als Eintrittsbereich für den Ablassvolumenstrom in den Durchmischungsraum der Vermischungseinrichtung. Die offene Unterseite dient insbesondere als Eintrittspunkt beziehungsweise Eintrittsfläche beziehungsweise Eintrittsbereich für den Luftvolumenstrom, mit dem sich der Ablassvolumenstrom vermischt. Die Unterseite des halbrohrförmigen Vermischungseinrichtung stellt insbesondere deren Grundseite oder Basisseite dar. Die von der Unterseite gebildete Fläche, die von den freien Endbereichen der gebogenen Wandung begrenzt ist, bildet die Ebene, von der sich die gebogene Wandung des Halbrohres nach oben erstreckt beziehungsweise wölbt. Alternativ oder zusätzlich weist das Halbrohr noch eine offene zweite Stirnseite auf, die insbesondere als Ausgangsseite für einen Fortluftstrom, bestehend aus dem vermischten Ablassvolumenstrom und dem Luftvolumenstrom, ausgebildet ist.

Anstelle eines Rohres, insbesondere eines Halbrohres, kann die Vermischungseinrichtung auch in Form eines anders geformten Profilelementbruchteils, beispielsweise eines Halbprofilelements ausgestaltet sein.

Bevorzugt gibt die Kontur der Vermischungseinrichtung eine Form für ein hypothetisches Volumen hinsichtlich der Vermischung des Ablassvolumenstroms mit dem Abluftvolumenstrom, insbesondere mit definierten Strömungsverhältnissen, vor. Ein hypothetisches Volumen ist dabei insbesondere ein solches, welches auf einer Annahme oder Unterstellung beruht. In dem hypothetischen Volumen befinden sich bevorzugt keine Zündquellen. Dies gilt insbesondere dann, wenn die Vermischungseinrichtung in einem Energiesystem eingebaut ist. Bei einer halbrohrförmigen Vermischungseinrichtung hat das hypothetische Volumen bevorzugt die Form eines Zylinders, der die Vermischungseinrichtung allseitig umgibt.

Gemäß dem zweiten Aspekt der Erfindung wird ein Energiesystem bereitgestellt, welches die Merkmale des unabhängigen Patentanspruchs 10 aufweist.

Bei dem Erfindungssystem handelt es sich insbesondere um ein Hausenergiesystem.

Das Energiesystem weist eine Energiequelleneinrichtung auf, die insbesondere als Elektrolyseeinrichtung, bevorzugt zur Herstellung von Wasserstoff, ausgebildet ist. Zusätzlich oder alternativ weist das Energiesystem eine Energiesenkeneinrichtung auf, die insbesondere als Brennstoffzelleneinrichtung ausgebildet ist, Weiterhin kann das Energiesystem optional eine zweite Energiequelleneinrichtung aufweisen, die insbesondere als Hochdruckspeichereinrichtung, insbesondre zur Speicherung von Wasserstoff, ausgebildet ist und/oder eine zweite Energiesenkeneinrichtung, die bevorzugt als Mitteldruckspeichereinrichtung, insbesondere zur Zwischenspeicherung von Wasserstoff ausgebildet ist.

Das Energiesystem weist zudem ein Spülsystem zum Spülen der Energiequelleneinrichtung und/oder der Energiesenkeneinrichtung auf, das gemäß dem ersten Erfindungsaspekt ausgebildet ist. Zur Beschreibung des Aufbaus und der Funktionsweise des Energiesystems wird an dieser Stelle vollinhaltlich auch auf die allgemeinen Ausführungen weiter oben sowie auf die Ausführungen zum erfindungsgemäßen Spülsystem vollinhaltlich Bezug genommen und verwiesen.

In einer bevorzugten Ausführungsform weist das Energiesystem ein erstes Untersystem auf, welches insbesondere in einem Systemschrank angeordnet ist. Die Energiequelleneirichtung und/oder die Energiesenkeneinrichtung sowie das Spülsystem sind dann Bestandteile des ersten Untersystems. Das erste Untersystem weist eine Mischzone auf, die derart bereitgestellt ist, dass in dieser der Ablassvolumenstrom und der Luftstrom, insbesondere der Abluftvolumenstrom, vermischt werden oder vermischbar sind. Die Vermischungseinrichtung ist bevorzugt in der Mischzone angeordnet oder ausgebildet.

Bevorzugt weist das Energiesystem wenigstens eine Kühlereinrichtung auf, die weiter oben schon allgemein beschrieben wurde und die insbesondere als Notkühler ausgebildet ist. Die Vermischungseinrichtung ist bevorzugt unterhalb der Kühlereinrichtung angeordnet oder ausgebildet.

Gemäß dem dritten Aspekt der Erfindung wird ein Verfahren bereitgestellt, welches die Merkmale des unabhängigen Patentanspruchs 14 aufweist.

Gemäß dem Verfahren wird ein Spülsystem gemäß dem ersten Erfindungsaspekt betrieben. Das Spülsystem ist insbesondere Bestandteil eines Energiesystems gemäß dem zweiten Aspekt der Erfindung. Zur Funktionsweise des Verfahrens wird zur Vermeidung von Wiederholungen deshalb auch auf die vorstehenden Ausführungen zum ersten und zweiten Aspekt der Erfindung, ebenso wie auf die allgemeine Ausführungen weiter oben, vollinhaltlich Bezug genommen und verwiesen.

Gemäß dem erfindungsgemäßen Verfahren wird ein in dem Spülsystem während eines Spülvorgangs erzeugter Ablassvolumenstrom in den von der Wandung der Vermischungseinrichtung begrenzten definierten offenen Durchmischungsraum geleitet, dort mit einem Luftvolumenstrom, insbesondere einem Abluftvolumenstrom, vermischt und von dort als Fortluftvolumenstrom abgeführt. Der Abluftvolumenstrom durchströmt vorzugsweise eine weiter oben beschriebene Verteileinrichtung im Durchmischungsraum, beispielsweise ein Rohr aus porösem Material. Der Luftvolumenstrom ist dabei insbesondere ein solcher, der im Betrieb des Energiesystems an anderer Stelle entsteht.

Gemäß dem vierten Aspekt der Erfindung wird eine Vermischungseinrichtung gemäß dem unabhängigen Patentanspruch 15 in besonderer Weise verwendet. Hinsichtlich der Ausgestaltung der Vermischungseinrichtung wird zur Vermeidung von Wiederholungen auf die entsprechenden Ausführungen im Rahmen der ersten bis dritten Erfindungsaspekte ebenso wie auf die allgemeinen Ausführungen weiter oben vollinhaltlich Bezug genommen und verwiesen.

Verwendet wird demgemäß einer Vermischungseinrichtung, welche eine Wandung aufweist, die einen definierten offenen Durchmischungsraum begrenzt, wobei die Wandung nur einen Teilbereich des Durchmischungsraums von weniger als 90% begrenzt und der von der Wandung nicht begrenzte Bereich der Vermischungseinrichtung einen Eintrittsbereich für wenigstens zwei Volumenströme bildet. Verwendet wird diese Vermischungsvorrichtung dazu, um einen von einem Spülsystem, insbesondere einem Spülsystem gemäß dem ersten Erfindungsaspekt, während eines Spülvorgangs einer Energiequelleneirichtung und/oder einer Energiesenkeneinrichtung eines Energiesystems, insbesondere eines Energiesystem gemäß dem zweiten Erfindungsaspekt, erzeugten Ablassvolumenstrom mit einem vom Energiesystem an anderer Stelle erzeugten Luftvolumenstrom, insbesondere einem Abluftvolumenstrom, zu vermischen. Die Verwendung sieht dabei insbesondere vor, dass durch die Vermischung der Ablassvolumenstrom, der Wasserstoff enthält, welcher an dieser Stelle ein Schadgas darstellt, in ausreichender Weise verdünnt wird.

Die vorliegende Erfindung gemäß den verschiedenen Erfindungsaspekten geht insbesondere von der Problemstellung aus, dass die Abgabe von Wasserstoff in einen Luftvolumenstrom unterhalb der unteren Explosionsgrenze erfolgen muss. Es bildet sich immer eine explosive Atmosphäre, die als gefahrdrohend einzustufen ist. Eine deshalb vorzunehmende Verdünnung des Wasserstoffs muss in einem Zustand erfolgen, in dem kein gezielter Volumenstrom eingesetzt werden kann. Der benötigte Volumenstrom sollte zudem so gering wie möglich sein, um einen sehr geringen Energieverbrauch zu haben.

Die vorliegende Erfindung besteht deshalb insbesondere darin, dass mittels einer Konstruktion, nämlich der Vermischungseinrichtung, insbesondere die Definition eines hypothetischen Volumens ermöglicht wird, welches ausreichend belüftet wird, so dass die Einhaltung einer mittlere Konzentration des Schadgases < 50% der unteren Explosionsgrenze und das betrachtete Volumen bei < 0,1m³ bleibt. Bei starker Lüftung mit guter Verfügbarkeit wird somit aus einer potentiellen Zone 0 ein nicht explosionsgefährdeter Bereich. Als Luftstrom, der zur Vermischung mit dem Ablassvolumenstrom zum Einsatz kommt, kann beispielsweise ein Abluftvolumenstrom des Energiesystems, beispielsweise des Hausenergiesystems, genutzt werden. Mögliche Zündquellen können im anschließenden Strömungspfad nach der Vermischungseinrichtung vorgesehen werden. Der wasserstoffhaltige Ablassvolumenstrom wird aus dem Spülsystem, beispielsweise einer Spülkammer, in die Vermischungseirichtung eingeleitet und erfährt dort eine vergrößerte Verweilzeit in einem definierten offenen Raum zum Durchmischen. Zur Sicherheit sollten sich innerhalb des hypothetischen Volumens keine Zündquellen befinden.

Mit der vorliegenden Erfindung lassen sich eine Reihe von Vorteilen realisieren. So kann eine einfache konstruktive Lösung bei einem festen umgehenden Lüftungsraum mit definierten Anströmverhältnissen bereitgestellt werden. Zusätzliche Wasserstoffsensoren sind nicht erforderlich. Die Kontur der Vermischungseinrichtung gibt dem hypothetischen Volumen eine Form.

Die Erfindung wird nun anhand eines Ausführungsbeispiels unter Bezugnahme auf die beiliegenden Zeichnungen näher erläutert. Es zeigen
- Figur 1: in schematischer Ansicht ein erfindungsgemäßes Energiesystem mit einem erfindungsgemäßen Spülsystem; und
- Figuren 2 bis 4: drei verschiedene Ansichten betreffend die Vermischungseinrichtung des Spülsystems.

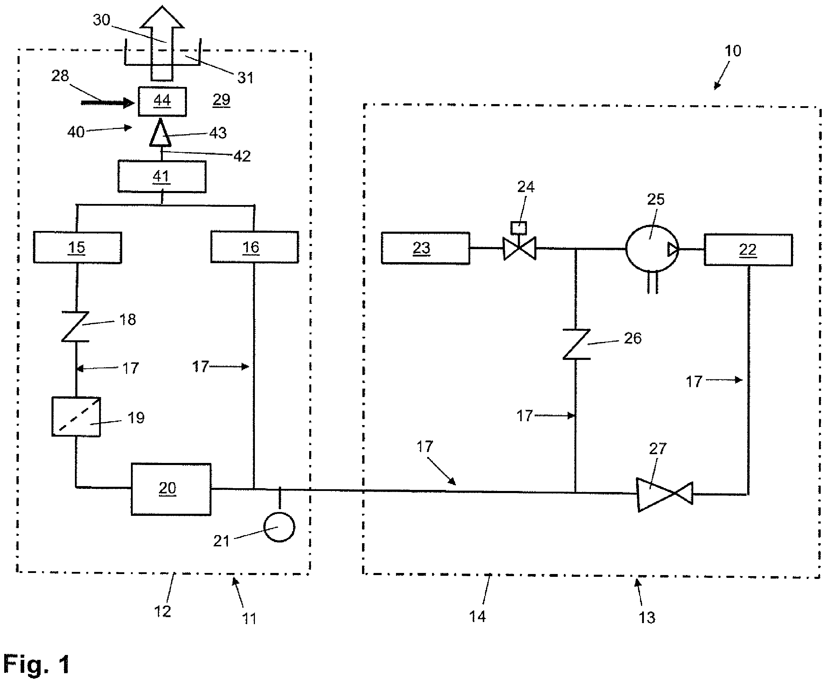

In den Figuren 1 bis 4 ist schematisch ein Energiesystem 10 dargestellt, welches als Hausenergiesystem eingesetzt wird. In Figur 1 wird zunächst der grundsätzliche Aufbau des Energiesystems 10 beschrieben.

Wie aus Figur 1 ersichtlich ist, weist das Energiesystem 10 zunächst ein erstes Untersystem 11 auf, welches als Innensystem ausgebildet ist. Das bedeutet, dass sich das erste Untersystem 11 innerhalb des Hauses befindet. Die einzelnen Komponenten des ersten Untersystems 11 sind in einem ersten Systemschrank 12 untergebracht. Zusätzlich weist das Energiesystem 10 ein zweites Untersystem 13 in Form eines Außensystems auf. Das bedeutet, dass sich das zweite Untersystem 13 außerhalb des Hauses befindet. Auch das zweite Untersystem 13 weist eine Reihe unterschiedlicher Komponenten auf, die in einem zweiten Systemschrank 14 untergebracht sind.

Das erste Untersystem 11 weist eine erste Energiequelleneinrichtung 15 auf, bei der es sich um eine Elektrolyseeinrichtung zur Herstellung von Wasserstoff handelt. Zudem weist das erste Untersystem 11 eine erste Energiesenkeneinrichtung 16 auf, bei der es sich um eine Brennstoffzelleneinrichtung handelt. Das zweite Untersystem 13 weist eine zweite Energiequelleneinrichtung 22 auf, bei der es sich um eine Hochdruckspeichereinrichtung handelt. In der Hochdruckspeichereinrichtung wird der in der Elektrolyseeinrichtung erzeugte Wasserstoff bei bis zu 700 bar gespeichert. Zusätzlich verfügt das zweite Untersystem 13 über eine zweite Energiesenkeneinrichtung 23 in Form einer Mitteldruckspeichereinrichtung, in der der erzeugte Wasserstoff bei Drücken zwischen 20 und 60 bar zwischengespeichert wird, bevor er von dort endgültig.in der Hochdruckspeichereinrichtung gespeichert wird.

Die einzelnen Komponenten des Energiesystems 10 sind über eine Verbindungsleitungseinrichtung 17 miteinander verbunden, die aus einer Anzahl unterschiedlicher Leitungsabschnitte besteht. Einzelne Leitungsabschnitte sind dabei als so genannte bidirektionale Leitungsabschnitte ausgebildet.

Zum Spülen der ersten Energiequelleneinrichtung 15 und/oder der ersten Energiesenkeneinrichtung 16 ist ein Spülsystem 40 vorgesehen, dessen Aufbau und Funktionsweise weiter unten in größerem Detail beschrieben werden.

Der in der ersten Energiequelleneirichtung 15 mittels Elektrolyse erzeugte Wasserstoff verlässt die erste Energiequelleneinrichtung 15 über einen Leitungsabschnitt der Verbindungsleitungseinrichtung 17, in dem sich in Strömungsrichtung des erzeugten Wasserstoffs beispielsweise eine Rückschlagventileinrichtung 18 sowie nachfolgend eine Filtereinrichtung 19 und eine Trocknereinrichtung 20 befinden, in denen der erzeugte Wasserstoff gefiltert und getrocknet wird. Die Filtereinrichtung 19 und die Trocknereinrichtung 20 können sich alternativ auch im zweiten Untersystem 13 befinden.

Von der Trocknereinrichtung 20 strömt der erzeugte Wasserstoff über weitere Leitungsabschnitte der Verbindungsleitungseinrichtung 17 zu einer weiteren Rückschlagventileinrichtung 26 in dem zweiten Untersystem 13. Von dort strömt der erzeugte Wasserstoff in die als Mitteldruckspeicher fungierende zweite Energiesenkeneinrichtung 23, welche über eine Ventileinrichtung 24, die insbesondere als Sperrventil, beispielsweise in Form eines Magnetventils, ausgebildet ist, an der Verbindungsleitungseinrichtung 17 angebunden ist. Vor der als Hochdruckspeichereinrichtung ausgebildeten zweiten Energiequelleneinrichtung 22 befindet sich in der Verbindungsleitungseinrichtung 17 eine Kompressoreinrichtung 25, insbesondere in Form eines Kolbenkompressors. Der in der zweiten Energiesenkeneinrichtung 23 zwischengespeicherte Wasserstoff wird unter Betätigung der Kompressoreinrichtung 25 in der zweiten Energiequelleneinrichtung 22 eingespeichert.

Dieser Herstellungsvorgang des Wasserstoffs bis hin zu dessen Einspeicherung in der zweiten Energiequelleneinrichtung 22 stellt eine erste Betriebsweise des Energiesystems 10 dar. Bei dieser ersten Betriebsweise des Energiesystems 10 herrscht in der Verbindungsleitungseinrichtung 17 ein Druck von 20 bis 60 bar. Ein solcher Druck herrscht auch in der zweiten Energiesenkeneinrichtung 23. Über die Kompressoreinrichtung 25 wird der aus der zweiten Energiesenkeneinrichtung 23, bei der es sich um einen Zwischenspeicher handelt, entnommene Wasserstoff so weit komprimiert, dass er mit Drücken von bis zu 700 bar in der zweiten Energiequelleneinrichtung 22, bei der es sich um eine Hochdruckspeichereinrichtung handelt, eingespeichert werden kann.

Der in der zweiten Energiequelleneinrichtung 22 gespeicherte Wasserstoff wird für den Betrieb der ersten Energiesenkeneinrichtung 16 in Form der Brennstoffzelleneinrichtung verwendet. Der Betrieb der Brennstoffzelleneinrichtung erfolgt in der zweiten Betriebsweise des Energiesystems 10. Die Brennstoffzelleneinrichtung kann aber nur bei Drücken kleiner 20 bar arbeiten. In der zweiten Betriebsweise des Energiesystems 10 wird der Wassersoff aus der zweiten Energiequelleneinrichtung 22 entnommen und über eine Entspannungseinrichtung 27 in Form eines Druckminderers entspannt, bevor er in die als Brennstoffzelleneinrichtung ausgebildete erste Energiesenkeneinrichtung 16 eintritt. Zur Messung des Drucks ist wenigstes eine Druckmesseinrichtung 21, beispielsweise in Form eines Drucksensors vorgesehen.

Das in den Figuren 1 bis 4 dargestellte Energiesystem 10 stellt einen Teilbereich eines Gesamt-Hausenergiesystems dar, bei dem es sich um ein elektrisch autarkes und vollständig auf erneuerbaren Energien beruhendes multihybrides Hausenergiespeichersystem handelt.

Das multihybride Hausenergiespeichersystem ermöglicht es, die von einer Photovoltaik (PV)-Anlage, einer Kleinwindkraftanlage oder dergleichen erzeugte elektrische Energie bedarfsgesteuert auf das gesamte Jahr zu verteilen. Dabei agiert das System als Inselsystem unabhängig vom elektrischen Netz. Vielmehr soll die Anlage die elektrische Autarkie des Hauses gewährleisten, sodass über das ganze Jahr hinweg keine elektrische Energie aus dem Stromnetz bezogen werden muss.

Die primäre Aufgabe des Hausenergiesystems ist es, die gewonnene elektrische Energie aus Photovoltaik (PV)-Modulen oder dergleichen dem Verbraucher im Haushalt verfügbar zu machen. Sekundär können bei Zeiten niedriger Last oder hoher Einstrahlung elektrische Energieüberschüsse in einem Batterie-Kurzzeit-Speicher zwischengespeichert werden. Tertiär kann im Wasserstoff-Langzeit-Speicher die elektrische Energie als gasförmiger Wasserstoff für Zeiten niedriger Einstrahlung wie Nacht, Winter oder dergleichen mittel- bis langfristig gespeichert und mittels Brennstoffzelle wieder jederzeit bedarfsgerecht zur Verfügung gestellt werden.

Neben energietechnischen Aufgaben fungiert das System auch als kontrollierte Wohnraumlüftung durch ein verbautes Lüftungsgerät.

Der in der Elektrolyseeinrichtung produzierte Wasserstoff fließt über die Wasserstoffleitung in die außenaufgestellte Druckspeicheranlage.

Bei fehlender oder nicht ausreichender PV-Energie wird Energie aus der Batterie zur Deckung der Verbraucherlast entnommen. Reicht die im Kurzzeitspeicher vorrätige Energie nicht aus, kann die Brennstoffzelleinnrichtung den zusätzlichen elektrischen Energiebedarf decken. Im Brennstoffzellenbetrieb fließt der Wasserstoff über die Wasserstoffleitung aus der Druckspeicheranlage zur Brennstoffzelleneinrichtung.

Ein zeitgleicher Betrieb von Brennstoffzelleneinrichtung und Elektrolyseeinrichtung ist ausgeschlossen. Das gesamte System wird zentral über einen Energy Manager mit einem prädiktiven Energiemanagement betrieben.

Das zweite Untersystem ist prinzipiell für den Betrieb im Außenbereich vorgesehen, kann aber unter bestimmten Bedingungen auch innerhalb eines speziellen Bereichs des Hauses errichtet und betrieben werden.

Während des Betriebs des Energiesystems 10 ist es erforderlich, dass die erste Energiequelleneinrichtung 15 in Form der Elektrolyseeinrichtung sowie die erste Energiesenkeneinrichtung 16 in Form der Brennstoffzelleneinrichtung regelmäßig gespült werden, wobei die Brennstoffzelleneinrichtung insbesondere auf der Anodenseite und die Elektrolyseeinrichtung insbesondere auf der Kathodenseite gespült werden. Ein Spülen ist insbesondere erforderlich, um unerwünschte Fremdgasanteile, sowie sich lokal in den Zellstrukturen ansammelndes flüssiges Wasser, die die Leistungsfähigkeit und die Lebensdauer der Brennstoffzelleneinrichtung und/oder der Elektrolyseeinrichtung negativ beeinflussen können, in regelmäßigen Abständen oder abhängig von den Betriebszuständen abzuführen.

Das Spülen erfolgt unter Zuhilfenahme des Spülsystems 40. In an sich bekannter weist das Spülsystem 40 zunächst eine Spüleinrichtung 41 auf, die beispielsweise wenigstens eine Speicherkammer, etwa in Form eines Faltenbalgs, aufweisen kann. Aus der Spüleinrichtung 41 tritt während des Spülvorgangs ein Ablassvolumenstrom 42 aus, der Wasserstoff beinhaltet, welcher an dieser Stelle ein Schadgas darstellt. Dadurch bildet sich grundsätzlich eine explosive Atmosphäre, so dass es erforderlich ist, die Abgabe von Wasserstoff beim Spülvorgang unterhalb der Explosionsgrenze zu senken. Dies wurde bislang beispielsweise dadurch bewerkstelligt, dass in einer Mischzone 29 des ersten Systemschranks 12, die eine dafür ausgebildete und konzipierte Zone darstellt, und die mit entsprechenden Sicherheitsmaßnahmen ausgestattet ist, der wasserstoffhaltige Ablassvolumenstrom 42 mit einem Luftstrom 28 des Energiesystems 10, insbesondere einem Abluftvolumenstrom so vermischt wird, dass der Wasserstoffgehalt in dem dadurch entstehenden resultierenden Fortluftvolumenstroms 30 nur noch einen unter der Explosionsgrenze liegenden Gehalt, beispielsweise von kleiner 2%, aufweist. Die Abgabe des Ablassvolumenstroms 42 in die Umgebung, das heißt in die Mischzone 29, erfolgt dabei generell über eine geeignete Ausströmeinrichtung 43, die beispielsweise als Blende, Drossel, Düse oder dergleichen ausgebildet sein kann. Der im Rahmen der Vermischung entstehende Fortluftvolumenstrom 30 wird über einen Fortluftkanal 31 aus dem ersten Untersystem 11 beziehungsweise dem ersten Systemschrank 12 abgeführt und kann für andere Funktionen, beispielsweise eine Lüftung und/oder Heizung und/oder Kühlung, bereitgestellt werden.

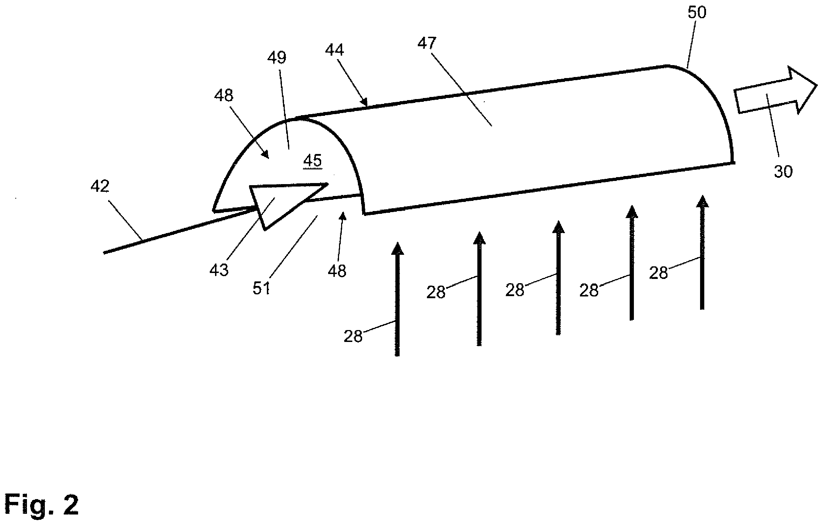

In Strömungsrichtung des Ablassvolumenstroms 42 hinter der Spüleinrichtung 41, bevorzugt in der Mischzone 29, befindet sich nun ein weiteres Bauteil in Form einer Vermischungseinrichtung 44. Diese Vermischungseinrichtung 44 ist im Detail in den Figuren 2 bis 4 dargestellt, auf die nun näher eingegangen wird.

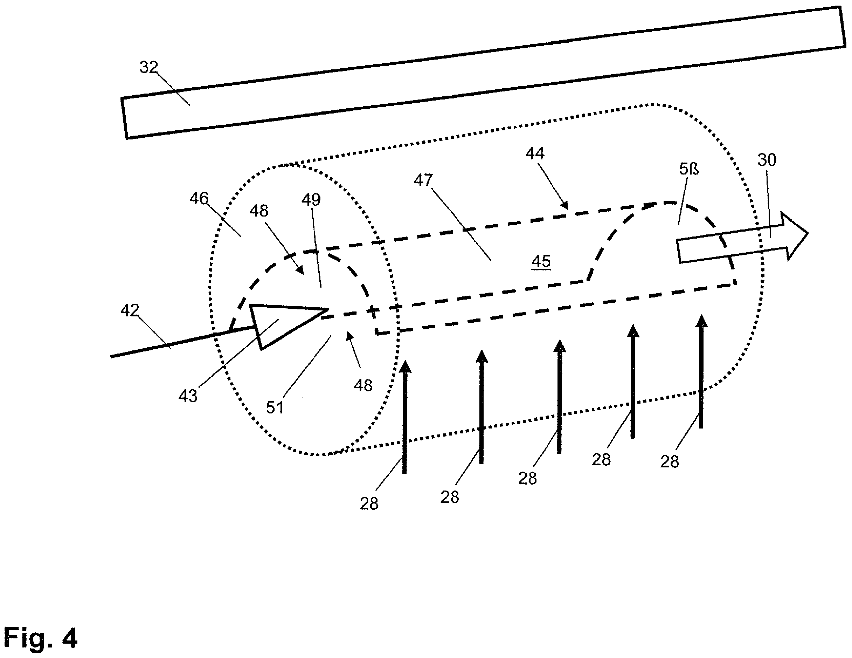

Die Vermischungseinrichtung 44, die sich im ersten Untersystem 11, bevorzugt unterhalb einer Kühleinrichtung 32 in Form eines Notkühlers, befindet (Figur 4), weist eine Wandung 47 auf, die einen definierten, offenen Durchmischungsraum 45 begrenzt. Dabei und entsprechend der Erfindung, begrenzt die Wandung 47 der Vermischungseinrichtung 44 jedoch nur einen Teilbereich des Durchmischungsraums 45. Der von der Wandung 47 nicht begrenztes Bereich der Vermischungseinrichtung 44 bildet entsprechend der Erfindung einen Eintrittsbereich 48 für den Ablassvolumenstrom 42 und für den Luftvolumenstrom 28 in den Durchmischungsraum 45.

In dem gezeigten Ausführungsbeispiel ist die Vermischungseinrichtung 44 in Form eines Halbrohres ausgebildet. Dieses Halbrohr weist eine erste offene Stirnseite 49 und eine offene Unterseite 51 auf. Die Stirnseite 49 und/oder die Unterseite 51 dienen als Eintrittsseite für den aus der Ausströmeinrichtung 43 austretenden Wasserstoff-Ablassvolumenstrom 42. Die offene Unterseite 51 der halbrohrförmigen Vermischungseinrichtung 44 stellt insbesondere auch eine Eintrittsfläche bereit, über die der Luftvolumenstrom 28, insbesondere der Abluftvolumenstrom, in den Durchmischungsraum 45 eintritt. Dabei kann der Luftvolumenstrom 28 über die gesamte offene Unterseite 51 in den Durchmischungsraum 45 eintreten. Durch die Ausgestaltung der Vermischungseinrichtung 44 wird ein hypothetisches Volumen 46 geschaffen, welches die Spülzone definiert.

Bei der in Figur 2 dargestellten Ausführungsform tritt der Ablassvolumenstrom 42 über den Ausströmeinrichtung 43 im Eintrittsbereich 48 in den Durchmischungsraum 45 ein, verteilt sich dort und vermischt sich mit dem Luftvolumenstrom 28.

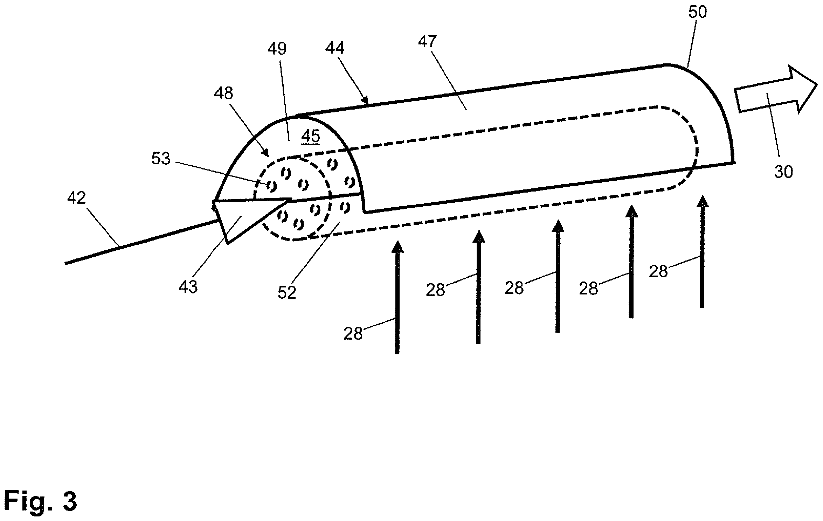

Um die Strömungseigenschaften des Ablassvolumenstroms 42 in dem Durchmischungsraum 45 zu beeinflussen, insbesondere hinsichtlich dessen Strömungseigenschaften, wie beispielsweise des Strömungsverlaufs, und um die Strömung des Ablassvolumenstroms 42 in dem Durchmischungsraum 45 gegebenenfalls auch zu begrenzen und/der zu stauen, ist bevorzugt ein weiteres Bauteil in Form einer Verteileinrichtung 52 vorgesehen, die in Figur 3 dargestellt ist. Die Verteilreinrichtung 52 ist bevorzugt als ein Rohr aus porösem Material ausgebildet. In Figur 3 sind zur Verdeutlichung einige Poren 53 schematisch angedeutet. Die aus porösem Material bestehe3nde rohrförmige Verteileinrichtung 52 erstreckt sich über die gesamte Länge oder annähernd die gesamte Länge des Durchmischungsraums 45. Die Verteileinrichtung 52 wirkt mit der Ausströmeinrichtung 43 bevorzugt so zusammen, dass der Ablassvolumenstrom 42, der die Ausströmeinrichtung 43 verlässt, unmittelbar oder möglichst unmittelbar in die Verteileinrichtung 52 eintritt. Aufgrund des porösen Materials durchdringt der Ablassvolumenstrom 42 die Verteileinrichtung 52, wodurch seine Strömungseigenschaften beeinflusst werden. Über die Poren 53 der Verteileinrichtung 52 tritt der Ablassvolumenstrom 42 dann an verschiedenen Stellen aus der Verteileinrichtung 52 aus und in den Durchmischungsraum 45 ein, wo er sich, möglichst gleichmäßig und bevorzugt unter einem bevorzugten reduzierten Druck, mit dem Luftvolumenstrom 28 vermischt.

Wie man aus Figur 4 erkennen kann, hat das hypothetische Volumen 46 bei dieser halbrohrförmigen Vermischungseinrichtung 44 bevorzugt die Form eines Zylinders, der sich um die Vermischungseinrichtung 44 herum erstreckt. Der bei der Durchmischung entstehende Fortluftvolumenstrom 30 wird im dargestellten Beispiel über eine zweite offene Stirnseite 50 der Vermischungseinrichtung 44 abgeleitet. Grundsätzlich ist es für die vorliegende Erfindung egal, von wo die Abluftströmung erfolgt. Bevorzugt ist jedoch vorgesehen, dass der Fortluftvolumenstrom 30 über die Kühlereinrichtung 32 geleitet wird, wo der Fortluftvolumenstrom 30, sofern erforderlich oder gewünscht, entweder zu Heizzwecken oder zu Kühlzwecken weiter genutzt werden kann.

Durch die Verwendung der Vermischungseinrichtung 44 wird der aus der Spüleinrichtung 41, insbesondere aus dem Faltenbalg, abgelassene Wasserstoff unter einer Vergrößerung der Verweilzeit in dem definierten offenen Durchmischungsraum 45 der Vermischungseinrichtung 44 durchmischt. Dabei ist darauf zu achten, dass sich in der Nähe der Vermischungseinrichtung 44, bevorzugt innerhalb des hypothetischen Volumens 46, keine Zündquellen befinden.

Die Vermischung hat den Effekt, dass der mit Wasserstoff beladene Ablassvolumenstrom 42 durch die Vermischung mit dem Luftvolumenstrom 28, bei dem es sich insbesondere um einen Abluftvolumenstrom handelt, der an anderer Stelle im Energiesystem 10 entsteht oder erzeugt wird, so weit verdünnt wird, dass der im Ablassvolumenstrom 42 befindliche Wasserstoff eine kritische Gehaltsgrenze, die beispielsweise bei kleiner 2% liegt, in jedem Fall unterschreitet.

### Bezugszeichenliste

- 10: Energiesystem (Hausenergiesystem
- 11: Erstes Untersystem (Innensystem)
- 12: Erster Systemschrank
- 13: Zweites Untersystem (Außensystem)
- 14: Zweiter Systemschrank
- 15: Erste Energiequelleneinrichtung (Elektrolyseeinrichtung)
- 16: Erste Energiesenkeneinrichtung (Brennstoffzelleneinrichtung)
- 17: Verbindungsleitungseinrichtung
- 18: Rückschlagventileinrichtung
- 19: Filtereinrichtung
- 20: Trocknereinrichtung
- 21: Druckmesseinrichtung
- 22: Zweite Energiequelleneinrichtung (Hochdruckspeichereinrichtung)
- 23: Zweite Energiesenkeneinrichtung (Mitteldruckspeichereinrichtung)
- 24: Ventileinrichtung
- 25: Kompressoreinrichtung
- 26: Rückschlagventileinrichtung
- 27: Entspannungsvorrichtung (Druckminderer)
- 28: Luftvolumenstrom (Abluftvolumenstrom)
- 29: Mischzone
- 30: Fortluftvolumenstrom
- 31: Fortluftkanal
- 32: Kühlereinrichtung (Notkühler)
- 40: Spülsystem
- 41: Spüleinrichtung
- 42: Ablassvolumenstrom
- 43: Ausströmeinrichtung
- 44: Vermischungseinrichtung
- 45: Durchmischungsraum
- 46: Hypothetisches Volumen (Spülzone)
- 47: Wandung der Vermischungseinrichtung
- 48: Eintrittsbereich der Vermischungseinrichtung
- 49: Erste Stirnseite der Vermischungseinrichtung
- 50: Zweite Stirnseite der Vermischungseinrichtung
- 51: Unterseite der Vermischungseinrichtung
- 52: Verteilungseinrichtung
- 53: Poren

## Patentansprüche

1. Spülsystem (40), welches bereitgestellt ist, um wenigstens eine Energiequelleneinrichtung (15) und/oder wenigstens eine Energiesenkeneinrichtung (16) zu spülen, aufweisend eine Spüleinrichtung (41), die derart bereitgestellt ist, dass sie in der Lage ist, während eines Spülvorgangs einen Ablassvolumenstrom (42) zu erzeugen, wobei das Spülsystem (40) ein der Spüleinrichtung (41) in Strömungsrichtung des Ablassvolumenstroms (42) nachgeordnete Vermischungseinrichtung (44) aufweist, die bereitgestellt ist, um den Ablassvolumenstrom (42) mit einem Luftvolumenstrom (28) zu vermischen, **dadurch gekennzeichnet, dass** die Vermischungseinrichtung (44) einen definierten offenen Durchmischungsraum (45) für die Vermischung des Ablassvolumenstroms (42) mit dem Luftvolumenstrom (28) aufweist, dass die Vermischungseinrichtung (44) dazu eine den Durchmischungsraum (45) begrenzende Wandung (47) aufweist, dass die Wandung (47) nur einen Teilbereich des Durchmischungsraums (45) von weniger als 90% begrenzt, und dass der von der Wandung (47) nicht begrenzte Bereich der Vermischungseinrichtung (44) einen Eintrittsbereich (48) für den Ablassvolumenstrom (42) und den Luftvolumenstrom (28) bildet.

2. Spülsystem nach Anspruch 1, **dadurch gekennzeichnet, dass** das Spülsystem (40) eine Ausströmeinrichtung (43) aufweist, die mit der Vermischungseirichtung (44) zusammenwirkt und dass die Ausströmeinrichtung (43) insbesondere als Blende, Drossel, Düse oder Pumpe ausgebildet ist.

3. Spülsystem nach einem der Ansprüche 1 oder 2, **dadurch gekennzeichnet, dass** die Vermischungseinrichtung (44) eine Verteileinrichtung (52) zum Verteilen des Ablassvolumenstroms (42) in dem Durchmischungsraum (45) aufweist, und dass die Verteileinrichtung (52) zumindest teilweise in dem Durchmischungsraum (45) angeordnet ist.

4. Spülsystem nach Anspruch 3, **dadurch gekennzeichnet, dass** die Verteileinrichtung (52) in Form eines Rohres ausgebildet ist und/oder dass die Verteileinrichtung (52) zumindest bereichsweise aus einem porösen Material besteht.

5. Spülsystem nach einem der Ansprüche 1 bis 4, **dadurch gekennzeichnet, dass** die Spüleinrichtung (41) wenigstens eine Speicherkammer aufweist, dass der Ablassvolumenstrom (42) aus der Speicherkammer bereitgestellt ist oder wird, und dass die Speicherkammer insbesondere als Faltenbalg ausgebildet ist.

6. Spülsystem nach einem der Ansprüche 1 bis 5, **dadurch gekennzeichnet, dass** die Vermischungseinrichtung (44) haubenförmig oder schirmförmig oder schalenförmig ausgebildet ist, oder dass die Vermischungseinrichtung (44) eine bogenförmig verlaufende Wandung aufweist.

7. Spülsystem nach einem der Ansprüche 1 bis 6, **dadurch gekennzeichnet**, die Vermischungseinrichtung (44) in Form eines Bruchteils eines Rohres ausgebildet ist, und dass dessen Wandung (47) den Durchmischungsraum (45) begrenzt.

8. Spülsystem nach Anspruch 7, **dadurch gekennzeichnet, dass** die Vermischungseinrichtung (44) eine erste offene Stirnseite (49) aufweist und/oder dass die Vermischungseinrichtung (44) eine offene Unterseite (51) aufweist und/oder dass die Vermischungseinrichtung (44) eine zweite offene Stirnseite (50) aufweist.

9. Spülsystem nach einem der Ansprüche 1 bis 8, **dadurch gekennzeichnet, dass** die Kontur der Vermischungseinrichtung (44) eine Form für ein hypothetisches Volumen (46) hinsichtlich der Vermischung des Ablassvolumenstroms (42) mit dem Luftvolumenstrom (28) vorgibt.

10. Energiesystem (10), mit einer Energiequelleneinrichtung (15), die als Elektrolyseeinrichtung ausgebildet ist, und/oder mit einer Energiesenkeneinrichtung (16), die als Brennstoffzelleneinrichtung ausgebildet ist, und mit einem Spülsystem (40) zum Spülen der Energiequelleneinrichtung (15) und/oder der Energiesenkeneinrichtung (16), **dadurch gekennzeichnet, dass** das Spülsystem (40) nach einem der Ansprüche 1 bis 9 ausgebildet ist.

11. Energiesystem nach Anspruch 10, **dadurch gekennzeichnet, dass** das Energiesystem (10) ein erstes Untersystem (11) aufweist, dass die Energiequelleneirichtung (15) und/oder die Energiesenkeneinrichtung (16) sowie das Spülsystem (40) Bestandteile des ersten Untersystems (11) sind, dass das erste Untersystem (11) eine Mischzone (29) aufweist, die derart bereitgestellt ist, dass in dieser der Ablassvolumenstrom (42) und der Luftvolumenstrom (28), insbesondere der Abluftvolumenstrom, vermischt werden oder vermischbar sind und dass die Vermischungseinrichtung (44) in der Mischzone (29) angeordnet oder ausgebildet ist.

12. Energiesystem nach Anspruch 11, **dadurch gekennzeichnet, dass** das erste Untersystem (11) in einem ersten Systemschrank (12) angeordnet ist.

13. Energiesystem nach einem der Ansprüche 10 bis 12, **dadurch gekennzeichnet, dass** dieses wenigstens eine Kühlereinrichtung (32) aufweist, und dass die Vermischungseinrichtung (44) unterhalb der Kühlereinrichtung (32) angeordnet oder ausgebildet ist.

14. Verfahren zum Betreiben eines Spülsystems (40) nach einem der Ansprüche 1 bis 9, oder eines Energiesystems (10) nach einem der Ansprüche 10 bis 13, **dadurch gekennzeichnet, dass** ein in dem Spülsystem (40) während eines Spülvorgangs erzeugter Ablassvolumenstrom (42) in den von der Wandung (47) der Vermischungseinrichtung (44) begrenzten definierten offenen Durchmischungsraum (45) geleitet, dort mit einem Luftvolumenstrom (28), insbesondere einem Abluftvolumenstrom, vermischt und von dort als Fortluftvolumenstrom (30) abgeführt wird.

15. Verwendung einer Vermischungseinrichtung (44), welche eine Wandung (47) aufweist, die einen definierten offenen Durchmischungsraum (45) begrenzt, wobei die Wandung (47) nur einen Teilbereich des Durchmischungsraums (45) von weniger als 90% begrenzt und der von der Wandung (47) nicht begrenzte Bereich der Vermischungseinrichtung (44) einen Eintrittsbereich (48) für wenigstens zwei Volumenströme bildet, um einen von einem Spülsystem (40) während eines Spülvorgangs einer Energiequelleneirichtung (15) und/oder einer Energiesenkeneinrichtung (16) eines Energiesystems (10) erzeugten Ablassvolumenstrom (42) mit einem vom Energiesystem (10) an anderer Stelle erzeugten Luftvolumenstrom (28), zu vermischen.

## Claims

1. A purging system (40), which is provided in order to purge at least one energy source device (15) and/or at least one energy sink device (16), comprising a purging device (41) which is provided in such a way that it is capable to generate a discharge volume flow (42) during a purging process, wherein the purging system (40) comprises a mixing device (44), being provided, in flow direction of the discharge volume flow, downstream the purging device (41), which is provided for mixing the discharge volume flow (42) with an air volume flow (28), **characterized in that** the mixing device (44) comprises a defined open mixing space (45) for mixing the discharge volume flow (42) with the air volume flow (28), **in that** the mixing device (44) for this purpose comprises a wall (47), **in that** the wall (47) delimits only a partial region of the mixing space (45) to less than 90%, and **in that** the region of the mixing device (44), which is not limited by the wall (47), forms an entrance area (48) for the discharge volume flow (42) and the air volume flow (28).

2. The purging system according to claim 1, **characterized in that** the purging system (40) comprises an outflow device (43) which interacts with the mixing device (44), and that, in particular, the outflow device (43) is configured as a diaphragm, throttle, nozzle or pump.

3. The purging system according to claim 1 or 2, **characterized in that** the mixing device (44) comprises a distribution device (52) for distributing the discharge volume flow (42) in the mixing space (45), and **in that** the distribution device (52) is arranged at least partially in the mixing space (45).

4. The purging system according to claim 3, **characterized in that** the distribution device (52) is configured in the form of a pipe and/or **in that** the distribution device (52) consists at least partially of a porous material.

5. The purging system according to anyone of claims 1 to 4, **characterized in that** the purging device (41) comprises at least one storage chamber, **in that** the discharge volume flow (42) is or gets provided from the storage chamber, and **in that** the storage chamber is configured in particular as a bellows.

6. The purging system according to anyone of claims 1 to 5, **characterized in that** the mixing device (44) is of a hood-shaped or an umbrella-shaped or a shell-shaped design, or **in that** the mixing device (44) has an arc-shaped wall.

7. The purging system according to anyone of claims 1 to 6, **characterized in that** mixing device (44) is provided in the form of a fraction of a pipe, and **in that** its wall delimits the mixing space (45).

8. The purging system according to claim 7, **characterized in that** the mixing device (44) comprises a first open end face (49) and/or **in that** the mixing device (44) comprises an open underside (51) and/or **in that** the mixing device (44) comprises a second open end face (50).

9. The purging system according to anyone of claims 1 to 8, **characterized in that** the contour of the mixing device (44) presets a shape for a hypothetical volume (46) with regard to the mixing of the discharge volume flow (42) with the air volume flow (28).

10. An energy system (10), comprising an energy source device (15), which is configured as an electrolysis device, and/or comprising an energy sink device (16), which is configured as a fuel cell device, and comprising a purging system (40) for purging the energy source device (15) and/or the energy sink device (16), **characterized in that** the purging system (40) is configured according to anyone of claims 1 to 9.

11. The energy system according to claim 10, **characterized in that** the energy system (10) comprises a first subsystem (11), **in that** the energy source device (15) and/or the energy sink device (16) and the purging system (40) are components of the first subsystem (11), **in that** the first subsystem (11) comprises a mixing zone (29) which is provided in such a way that therein the discharge volume flow (42) and the air volume flow (28), in particular the exhaust air volume flow, are mixed or can get mixed, and **in that** the mixing device (44) is arranged or provided in the mixing zone (29).

12. The energy system according to claim 11, **characterized in that** the first subsystem (11) is arranged in a first system cabinet (12),

13. The energy system according to anyone of claims 10 to 12, **characterized in that** it comprises at least one cooler device (32), and **in that** the mixing device (44) is arranged or provided below the cooler device (32).

14. A method for operating a purging system (40) according to anyone of Claims 1 to 9, or an energy system (10) according to anyone of Claims 10 to 13, **characterized in that** a discharge volume flow (42), which has been generated in the purging system (40) during a purging process, is led into the defined open mixing space (45) delimited by the wall (47) of the mixing device (44), is mixed there with an air volume flow (28), in particular an exhaust air volume flow, and is discharged from there as an exhaust air volume flow (30).

15. Use of a mixing device (44), which comprises a wall (47) that delimits a defined open mixing space (45), wherein the wall (47) delimits only a partial region of the mixing space (45) to less than 90%, and the region of the mixing device (44) that is not delimited by the wall (47), forms an entrance area (48) for at least two volume flows, in order to mix a discharge volume flow (42), that has been generated by a purging system (40) during a purging process of an energy source device (15) and/or an energy sink device (16) of an energy system (10), with an air volume flow (28), generated by the energy system (10) at a different point.

## Revendications

1. Système de rinçage (40) qui est prévu pour rincer au moins un appareil de source d'énergie (15) et/ou au moins un appareil de dissipation d'énergie (16), présentant un appareil de rinçage (41) qui est prévu de sorte qu'il soit capable de générer un flux volumique de purge (42) pendant une opération de rinçage, dans lequel le système de rinçage (40) présente un appareil de mélange (44) disposé en aval de l'appareil de rinçage (41) dans le sens d'écoulement du flux volumique de purge (42), qui est prévu pour mélanger le flux volumique de purge (42) avec un flux volumique d'air (28), **caractérisé en ce que** l'appareil de mélange (44) présente une chambre de mélange (45) ouverte définie pour le mélange du flux volumique de purge (42) avec le flux volumique d'air (28), **en ce que** l'appareil de mélange (44) présente à cet effet une paroi (47) délimitant la chambre de mélange (45), **en ce que** la paroi (47) délimite uniquement une zone partielle de la chambre de mélange (45) de moins de 90 %, et **en ce que** la zone de l'appareil de mélange (44) non délimitée par la paroi (47) forme une zone d'entrée (48) pour le flux volumique de purge (42) et le flux volumique d'air (28).

2. Système de rinçage selon la revendication 1, **caractérisé en ce que** le système de rinçage (40) présente un appareil d'écoulement (43) qui interagit avec l'appareil de mélange (44) et **en ce que** l'appareil d'écoulement (43) est conçu en particulier en tant que grille, restricteur, buse ou pompe.

3. Système de rinçage selon l'une quelconque des revendications 1 ou 2, **caractérisé en ce que** l'appareil de mélange (44) présente un appareil de répartition (52) pour répartir le flux volumique de purge (42) dans la chambre de mélange (45), et **en ce que** l'appareil de répartition (52) est disposé au moins partiellement dans la chambre de mélange (45).

4. Système de rinçage selon la revendication 3, **caractérisé en ce que** l'appareil de répartition (52) est conçu sous forme d'un tube et/ou **en ce que** l'appareil de répartition (52) est constitué d'un matériau poreux au moins par zones.

5. Système de rinçage selon l'une quelconque des revendications 1 à 4, **caractérisé en ce que** l'appareil de rinçage (41) présente au moins une chambre de stockage, **en ce que** le flux volumique de purge (42) est ou sera prévu à partir de la chambre de stockage, et **en ce que** la chambre de stockage est conçue en particulier en tant que soufflet.

6. Système de rinçage selon l'une quelconque des revendications 1 à 5, **caractérisé en ce que** l'appareil de mélange (44) est conçu en forme de capot ou en forme de parapluie ou en forme de coque, ou **en ce que** l'appareil de mélange (44) présente une paroi s'étendant en forme d'arc.

7. Système de rinçage selon l'une quelconque des revendications 1 à 6, **caractérisé en ce que** l'appareil de mélange (44) est conçu sous forme d'une fraction d'un tube, et **en ce que** sa paroi (47) délimite la chambre de mélange (45).

8. Système de rinçage selon la revendication 7, **caractérisé en ce que** l'appareil de mélange (44) présente une première face avant ouverte (49) et/ou **en ce que** l'appareil de mélange (44) présente une face inférieure ouverte (51) et/ou **en ce que** l'appareil de mélange (44) présente une seconde face avant ouverte (50).

9. Système de rinçage selon l'une quelconque des revendications 1 à 8, **caractérisé en ce que** le contour de l'appareil de mélange (44) prédéfinit une forme pour un volume hypothétique (46) concernant le mélange du flux volumique de purge (42) avec le flux volumique d'air (28).

10. Système d'énergie (10) avec un appareil de source d'énergie (15) qui est conçu en tant qu'appareil d'électrolyse, et/ou avec un appareil de dissipation d'énergie (16) qui est conçu en tant qu'appareil de pile à combustible, et avec un système de rinçage (40) pour rincer l'appareil de source d'énergie (15) et/ou l'appareil de dissipation d'énergie (16), **caractérisé en ce que** le système de rinçage (40) est conçu selon l'une quelconque des revendications 1 à 9.

11. Système d'énergie selon la revendication 10, **caractérisé en ce que** le système d'énergie (10) présente un premier sous-système (11), **en ce que** l'appareil de source d'énergie (15) et/ou l'appareil de dissipation d'énergie (16) ainsi que le système de rinçage (40) sont des composants du premier sous-système (11), **en ce que** le premier sous-système (11) présente une zone de mélange (29) qui est prévue de sorte que le flux volumique de purge (42) et le flux volumique d'air (28), en particulier le flux volumique d'air d'évacuation, soient mélangés ou peuvent être mélangés dans celle-ci et **en ce que** l'appareil de mélange (44) est disposé ou formé dans la zone de mélange (29).

12. Système d'énergie selon la revendication 11, **caractérisé en ce que** le premier sous-système (11) est disposé dans une première armoire de système (12).

13. Système d'énergie selon l'une quelconque des revendications 10 à 12, **caractérisé en ce qu'**il présente au moins un appareil de refroidisseur (32), et **en ce que** l'appareil de mélange (44) est disposé ou formé sous l'appareil de refroidisseur (32).

14. Procédé de fonctionnement d'un système de rinçage (40) selon l'une quelconque des revendications 1 à 9, ou d'un système d'énergie (10) selon l'une quelconque des revendications 10 à 13, **caractérisé en ce qu'**un flux volumique de purge (42) généré dans le système de rinçage (40) pendant une opération de rinçage est dirigé dans la chambre de mélange (45) ouverte définie et délimitée par la paroi (47) de l'appareil de mélange (44), y est mélangé avec un flux volumique d'air (28), en particulier un flux volumique d'air d'évacuation, et en est évacué en tant que flux volumique d'air rejeté(30).

15. Utilisation d'un appareil de mélange (44) qui présente une paroi (47) qui délimite une chambre de mélange ouverte définie (45), dans laquelle la paroi (47) délimite uniquement une zone partielle de la chambre de mélange (45) de moins de 90 % et la zone de l'appareil de mélange (44) non délimitée par la paroi (47) forme une zone d'entrée (48) pour au moins deux flux volumiques pour mélanger un flux volumique de purge (42) généré par un système de rinçage (40) pendant une opération de rinçage d'un appareil de source d'énergie (15) et/ou d'un appareil de dissipation d'énergie (16) d'un système d'énergie (10) avec un flux volumique d'air (28) généré par le système d'énergie (10) à un autre endroit.
